# EUROPÄISCHE PATENTSCHRIFT

(11) **EP 3 534 157 B1**
(45) Veröffentlichungstag und Bekanntmachung des Hinweises auf die Patenterteilung: **16.08.2023**
(21) Anmeldenummer: 19156557.1
(22) Anmeldetag: 12.02.2019
(51) Int. Cl.: G01K 11/20, G01N 21/64, G01N 13/00

(54) **VERFAHREN UND VORRICHTUNG ZUM MESSEN EINER TEMPERATUR EINES FLUIDS ZUR VERWENDUNG MIT EINER MIKROFLUIDISCHEN ANALYSEVORRICHTUNG UND MIKROFLUIDISCHE ANALYSEVORRICHTUNG MIT EINER VORRICHTUNG**
METHOD AND DEVICE FOR MEASURING THE TEMPERATURE OF A FLUID FOR USE WITH A MICROFLUIDIC ANALYSIS DEVICE AND MICROFLUIDIC ANALYSIS DEVICE WITH A DEVICE
PROCÉDÉ ET DISPOSITIF DE MESURE D'UNE TEMPÉRATURE D'UN LIQUIDE DESTINÉ À ÊTRE UTILISÉ AVEC UN DISPOSITIF D'ANALYSE MICROFLUIDIQUE ET DISPOSITIF D'ANALYSE MICROFLUIDIQUE DOTÉ D'UN DISPOSITIF

(30) Priorität: 01.03.2018 DE 102018203048
(43) Veröffentlichungstag der Anmeldung: 04.09.2019
(73) Patentinhaber: Robert Bosch GmbH, 70442 Stuttgart (DE)
(72) Erfinder: Frank, Tino, 6003 Luzern (CH)

(56) Entgegenhaltungen:
- MICHAEL U. MUSHEEV ET AL: "Diffusion as a Tool of Measuring Temperature inside a Capillary", ANALYTICAL CHEMISTRY, Bd. 80, Nr. 17, 2. August 2008 (2008-08-02), Seiten 6752-6757, XP055610681, US ISSN: 0003-2700, DOI: 10.1021/ac8009406
- HUANG TIEMIN ET AL: "Axially illuminated fluorescence imaging detection for capillary isoelectric focusing on Teflon capillary", ANALYST, vol. 125, no. 7, 1 January 2000 (2000-01-01), pages 1231-1233, XP055845536, UK ISSN: 0003-2654, DOI: 10.1039/b003312j
- Girod Marco ET AL: "Monitoring the migration behavior of living microorganisms in capillary electrophoresis using laser-induced fluorescence detection with a charge-coupled device imaging system", Electrophoresis, vol. 23, no. 13, 22 July 2002 (2002-07-22) , page 2048, XP055845542, ISSN: 0173-0835, DOI: 10.1002/1522-2683(200207)23:13<2048::AID-E LPS2048>3.0.CO;2-T

## Beschreibung

### Stand der Technik

Die Ermittlung, unter Verwendung eines Diodenarrays, einer Diffusionscharakteristik aus einem Fluoreszenzsignal zur Temperaturmessung in einer Kapillare ist bekannt aus MICHAEL U. MUSHEEV ET AL: "Diffusion as a Tool of Measuring Temperature inside a Capillary", ANALYTICAL CHEMISTRY, Bd. 80, Nr. 17, 2. August 2008 (2008-08-02), Seiten 6752-6757, XP055610681, ISSN: 0003-2700, DOI: 10.1021/ac8009406.

Elektrophoresesysteme mit Kamera sind bekannt aus HUANG TIEMIN ET AL: "Axially illuminated fluorescence imaging detection for capillary isoelectric focusing on Teflon capillary", ANALYST, Bd. 125, Nr. 7, 1. Januar 2000 (2000-01-01), Seiten 1231-1233, XP055845536, ISSN: 0003-2654, DOI: 10.1039/b003312j und GIROD MARCOETAL: "Monitoring the migration behavior of living microorganisms in capillary electrophoresis using laser-induced fluorescence detection with a charge-coupled device imaging system", Electrophoresis, Bd. 23, Nr. 13, 22. Juli 2002 (2002-07-22), Seite 2048, XP055845542, ISSN: 0173-0835, DOI: 10.1002/1522-2683(200207)23:13 2048: :AI D-ELPS20483.0.CO;2-T.

Mikrofluidische Systeme erlauben das Analysieren von kleinen Probenmengen mit einer hohen Sensitivität. Automation, Miniaturisierung und Parallelisierung erlauben zudem eine Reduktion von händischen Schritten sowie eine Verminderung von dadurch verursachten Fehlern.

### Offenbarung der Erfindung

Vor diesem Hintergrund werden mit dem hier vorgestellten Ansatz ein Verfahren zum Messen einer Temperatur eines Fluids zur Verwendung mit einer mikrofluidischen Analysevorrichtung, weiterhin eine Vorrichtung, die dieses Verfahren verwendet, sowie ein entsprechendes Computerprogramm und schließlich eine mikrofluidische Analysevorrichtung mit einer Vorrichtung gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Die mit dem vorgestellten Ansatz erreichbaren Vorteile bestehen darin, dass ein hier vorgestelltes Verfahren vorteilhafterweise eine kalibrierfreie In-situ-Messung einer Temperatur eines Fluids ermöglicht. Dies erlaubt ein dynamisches Anpassen oder Verändern einer Temperiereinrichtung zum exakten Einstellen einer gewünschten Temperatur des Fluids.

Es wird ein Verfahren zum Messen einer Temperatur eines Fluids zur Verwendung mit einer mikrofluidischen Analysevorrichtung vorgestellt. Das Verfahren umfasst einen Schritt des Einlesens und einen Schritt des Bestimmens. Im Schritt des Einlesens wird zumindest ein Diffusionssignal eingelesen, das eine Diffusionscharakteristik einer Diffusion des Fluids repräsentiert. Im Schritt des Bestimmens wird die Temperatur unter Verwendung des zumindest einen Diffusionssignals bestimmt.

Die Diffusionscharakteristik wird unter Verwendung einer fluidspezifischen Diffusionskonstanten erkannt, welche eine raumzeitliche Kinetik dieses Fluids in m/s² repräsentiert. Die fluidspezifische Diffusionskonstante kann hierbei bekannt sein, sie ist jedoch temperaturabhängig, das heißt, je wärmer das Fluid ist, desto schneller diffundiert es. Durch eine Analyse einer Diffusion des Fluids kann demnach die Temperatur bestimmt werden.

Im Schritt des Bestimmens kann die Temperatur durch Lösen einer Diffusionsgleichung, also einer partiellen Differenzialgleichung, bestimmt werden.

Dieses Verfahren kann beispielsweise in Software oder Hardware oder in einer Mischform aus Software und Hardware beispielsweise in einem Steuergerät oder einer Vorrichtung implementiert sein.

Das Verfahren weist einem Schritt des Erkennens vor dem Schritt des Einlesens auf, wobei im Schritt des Erkennens die Diffusionscharakteristik des Fluids vorzugsweise unter Verwendung zumindest eines in das Fluid eingebrachten Hilfsmittels, insbesondere eines Fluoreszenzmittels, und erfindungsgemäß unter Verwendung zumindest eines Kamerabilds erkannt wird. Hierbei kann das Fluoreszenzmittel mit einer vordefinierten Konzentration in das Fluid eingebracht werden oder worden sein. Die Diffusionscharakteristik ist somit als ein Fluoreszenzsignal erkennbar, welches eine Konzentration des Hilfsmittels in dem Fluid anzeigen kann.

Von Vorteil ist es weiterhin, wenn gemäß einer Ausführungsform im Schritt des Einlesens zumindest ein weiteres Diffusionssignal eingelesen wird, wobei das Diffusionssignal eine Konzentration des Hilfsmittels und das weitere Diffusionssignal eine weitere Konzentration des Hilfsmittels in dem Fluid repräsentieren, wobei im Schritt des Bestimmens die Temperatur in Abhängigkeit von einer Konzentration des Hilfsmittels entsprechend dem Diffusionssignal und weiteren Diffusionssignal und/oder einer Zeitspanne zwischen einer Aufzeichnung des Diffusionssignals und des weiteren Diffusionssignals bestimmt werden kann.

Alternativ kann im Schritt des Einlesens aber auch als das Diffusionssignal ein linearer Konzentrationsgradient zwischen einer ersten Kammer mit einer ersten Konzentration des Hilfsmittels und/oder ersten Temperatur des Fluids und einer zweiten Kammer mit einer zweiten Konzentration des Hilfsmittels und/oder zweiten Temperatur des Fluids eingelesen werden. Die Temperatur, oder wenn sich die erste und die zweite Temperatur unterscheiden, auch beide Temperaturen, kann/können dann unter Verwendung des linearen Konzentrationsgradienten bestimmt werden. Derart sind zudem vorteilhafterweise unterschiedliche Temperaturen des Fluids in der ersten und der zweiten Kammer bestimmbar.

Vor dem Schritt des Einlesens kann das Verfahren einen Schritt des Veränderns einer Konzentration des Hilfsmittels aufweisen. Der Schritt des Veränderns kann auch vor dem Schritt des Erkennens durchgeführt werden. Hierbei kann beispielsweise ein Teil des Fluids mit der vordefinierten Konzentration des Hilfsmittels durch einen weiteren Teil des Fluids ohne das Hilfsmittel ausgetauscht werden. Eine Diffusion kann nun beobachtet werden. Somit können das oben beschriebene Diffusionssignal und das weitere Diffusionssignal bereitgestellt werden.

Im Schritt des Erkennens kann die Diffusionscharakteristik des Fluids aber auch unter Verwendung eines Bleichens des Hilfsmittels und/oder einer Beleuchtungseinrichtung erkannt werden. Hierbei kann das Fluid zuvor vollständig mit dem Hilfsmittel versetzt worden sein und dann an einer Stelle ein Teil des Hilfsmittels beispielsweise mittels Licht gebleicht werden. Es kann nun eine Zeit gemessen werden, bis durch Diffusion ein Fluoreszenzsignal an dieser Stelle wieder gesättigt ist.

Es ist weiterhin von Vorteil, wenn das Verfahren einen Schritt des Anpassens oder Veränderns aufweist, in dem unter Verwendung der Temperatur ein Anpasssignal (welches alternativ oder synonym auch als Veränderungssignal bezeichnet werden kann) zum Einstellen einer Temperiereinrichtung ausgegeben wird, insbesondere wenn die Temperatur in einem vorbestimmten Verhältnis zu einer Solltemperatur steht. Mittels des Anpass- bzw. Veränderungssignals kann hierbei ein Beheizen oder Kühlen des Fluids oder eines Fluidbehälters, in dem das Fluid angeordnet ist, bewirkt werden. Beispielsweise kann das Beheizen bewirkt werden, wenn die Temperatur die Solltemperatur unterschreitet, um ein Erreichen der Solltemperatur zu bewirken. Oder es kann das Kühlen bewirkt werden, wenn die Temperatur die Solltemperatur überschreitet, um ein Erreichen der Solltemperatur zu bewirken. Das Anpasssignal bzw. Veränderungssignal erlaubt hierbei vorteilhafterweise eine geregelte Temperaturkontrolle des Fluids.

Das Verfahren kann außerdem einen Schritt des Überprüfens aufweisen, in dem ein Prüfsignal eingelesen wird, das eine Aufnahme eines Fluidbehälters des Fluids auf oder an der Analysevorrichtung anzeigt, insbesondere wobei ein Warnsignal ausgegeben werden kann, wenn das Prüfsignal eingelesen wird, das eine fehlerhafte Aufnahme des Fluidbehälters auf oder an der Analysevorrichtung anzeigt. Der Schritt des Überprüfens kann ansprechend auf den Schritt des Bestimmens durchgeführt werden, beispielsweise wenn die Temperatur in einem vorbestimmten Verhältnis zu einer Solltemperatur steht. Weicht die Temperatur beispielsweise sehr stark, also einen definierten Toleranzbereich über- oder unterschreitend, von der Solltemperatur ab, so ist anzunehmen, dass der Fluidbehälter nicht korrekt auf der Heizeinrichtung aufliegt oder nicht korrekt an der Heizeinrichtung anliegt. Das Warnsignal kann beispielsweise dazu ausgebildet sein, um für einen Benutzer der Analysevorrichtung eine Fehlerinformation anzuzeigen und/oder einen Analysevorgang abzubrechen.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung ein Bestimmen einer Temperatur. Hierzu kann die Vorrichtung beispielsweise auf Sensorsignale wie zumindest ein Diffusionssignal zugreifen. Die Ansteuerung erfolgt über Aktoren wie eine Einleseeinrichtung zum Einlesen des Diffusionssignals und eine Bestimmeinrichtung zum Bestimmen der Temperatur unter Verwendung des Diffusionssignals.

Eine mikrofluidische Analysevorrichtung, insbesondere eine optofluidische Analysevorrichtung mit zumindest einer Kameraeinrichtung und/oder Beleuchtungseinrichtung, weist die vorgestellte Vorrichtung auf. Eine solche mikrofluidische Analysevorrichtung kann als Ersatz für bekannte mikrofluidische Analysevorrichtungen dienen, wobei die hier vorgestellte mikrofluidische Analysevorrichtung vorteilhafterweise schnell und einfach kalibrierfrei eine Temperatur eines Fluids bestimmen kann. Hierzu sind vorteilhafterweise keine zusätzlichen Bauteile für die Analysevorrichtung und keine händischen Schritte von einem Bediener der mikrofluidischen Analysevorrichtungen vonnöten.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung einer mikrofluidischen Analysevorrichtung mit einer Vorrichtung zum Messen einer Temperatur eines Fluids gemäß einem Ausführungsbeispiel;
Fig. 2 eine schematische Darstellung einer Diffusion eines Hilfsmittels in ein Fluid gemäß einem Ausführungsbeispiel;
Fig. 3 eine schematische Darstellung einer Diffusion eines Hilfsmittels in ein Fluid gemäß einem Ausführungsbeispiel;
Fig. 4 eine schematische Darstellung einer Diffusion eines Hilfsmittels in ein Fluid gemäß einem Ausführungsbeispiel;
Fig. 5 eine schematische Darstellung einer mikrofluidischen Analysevorrichtung mit einer Vorrichtung zum Messen einer Temperatur eines Fluids gemäß einem Ausführungsbeispiel;
Fig. 6 eine schematische Darstellung einer mikrofluidischen Analysevorrichtung mit einer Vorrichtung gemäß einem Ausführungsbeispiel;
Fig. 7 eine schematische Darstellung einer mikrofluidischen Analysevorrichtung mit einer Vorrichtung gemäß einem Ausführungsbeispiel;
Fig. 8 eine schematische Darstellung einer mikrofluidischen Analysevorrichtung mit einer Vorrichtung gemäß einem Ausführungsbeispiel;
Fig. 9 ein Ablaufdiagramm eines Verfahrens zum Messen einer Temperatur eines Fluids zur Verwendung mit einer mikrofluidischen Analysevorrichtung gemäß einem Ausführungsbeispiel; und
Fig. 10 ein Ablaufdiagramm eines Verfahrens zum Messen einer Temperatur eines Fluids zur Verwendung mit einer mikrofluidischen Analysevorrichtung gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

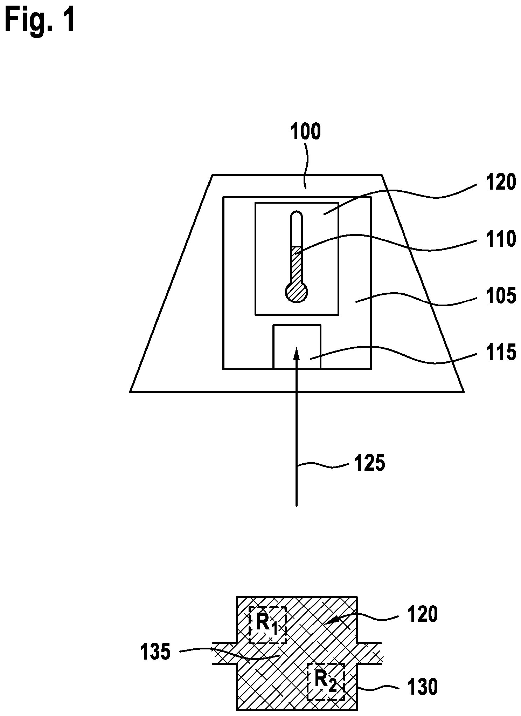

Fig. 1 zeigt eine schematische Darstellung einer mikrofluidischen Analysevorrichtung 100 mit einer Vorrichtung 105 zum Messen einer Temperatur 110 eines Fluids 120 gemäß einem Ausführungsbeispiel.

Gemäß diesem Ausführungsbeispiel ist die Vorrichtung 105 an oder in der mikrofluidischen Analysevorrichtung 100 aufgenommen. Gemäß diesem Ausführungsbeispiel handelt es sich bei der mikrofluidischen Analysevorrichtung 100 um eine optofluidische Analysevorrichtung 100, welche zumindest eine Kameraeinrichtung aufweist.

Die Vorrichtung 105 ist dazu ausgebildet, um die Temperatur 110 des Fluids 120 zu messen. Hierzu weist die Vorrichtung 105 eine Einleseeinrichtung 115 und eine Bestimmeinrichtung 120 auf. Die Einleseeinrichtung 115 ist dazu ausgebildet, um zumindest ein Diffusionssignal 125 einzulesen, das eine Diffusionscharakteristik einer Diffusion des Fluids 120 repräsentiert. Gemäß einem Ausführungsbeispiel liest die Einleseeinrichtung 115 das Diffusionssignal 125 von der Kameraeinrichtung ein. Die Bestimmeinrichtung 120 ist dazu ausgebildet, um die Temperatur 110 unter Verwendung des zumindest einen Diffusionssignals 125 zu bestimmen.

Gemäß diesem Ausführungsbeispiel ist das Fluid 120 zusammen mit einem Hilfsmittel 135 in einer Diffusionskammer 130 eines Fluidbehälters aufgenommen. Das Hilfsmittel 135 ist gemäß diesem Ausführungsbeispiel ein Fluoreszenzmittel, welches gemäß diesem Ausführungsbeispiel in einem bereits in das Fluid 120 diffundierten Zustand angeordnet ist.

Gemäß diesem Ausführungsbeispiel hat die Vorrichtung 105 die Diffusionscharakteristik des Fluids 120 unter Verwendung des Hilfsmittels 135 und/oder zumindest eines Kamerabilds der Kameraeinrichtung erkannt.

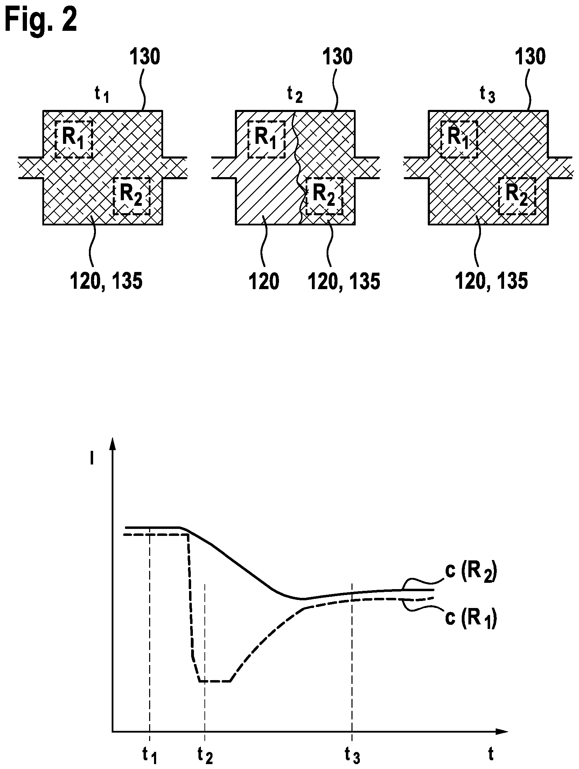

Ein von der Vorrichtung 105 ansteuerbares Bewirken der Diffusion des Hilfsmittels 135 in das Fluid 120 ist in Figur 2 beschrieben.

Im Folgenden werden Details der Vorrichtung 105 noch einmal genauer beschrieben:
Die hier gezeigte mikrofluidische Analysevorrichtung 100 kann auch als ein mikrofluidisches System bezeichnet werden, das ein Analysieren von kleinen Probenmengen mit einer hohen Sensitivität ermöglicht. Automation, Miniaturisierung und Parallelisierung erlauben zudem eine Reduktion von händischen Schritten sowie eine Verminderung von dadurch verursachten Fehlern.

Mikrofluidische Systeme, welche fluidische Vorgänge und analytische Schlüsse unter Verwendung eines optischen Systems ziehen, werden der Optofluidik zugeordnet. Die optofluidischen Ansätze nutzen dabei Eigenschaften von Licht aus, um Resultate zu generieren. Eine häufige Ausführungsform ist das Messen von Fluoreszenz. Fluoreszenz erlaubt die Visualisierung von spezifischen Molekülen wie Proteinen, beispielsweise durch Antikörperfärbung. Fusionsproteine können beispielsweise durch Integration von grün fluoreszierendem Protein, kurz GFP, in ein Protein via Proteinengineering visualisiert werden. Fluoreszenz erlaubt aber auch die Visualisierung von Nukleinsäuren, beispielsweise mittels quantitativer Echtzeit-Polymerase-Kettenreaktion, kurz qPCR, und/oder Schmelzkurven. Aber auch der Nachweis von chemischen Bindungen ist möglich, beispielsweise mittels des sogenannten Förster-Resonanzenergietransfers, kurz FRET-Technologie. Diese Technologien sind nicht nur von qualitativer Natur, sondern lassen sich auch quantifizieren. Rückschlüsse von vorhandener Menge und deren zeitlichen Entstehung oder Abbau sind möglich.

Quantitative Fluoreszenzmessungen werden in der Regel über eine Kalibrationsgerade ermöglicht. Eine bekannte Größe, beispielsweise eine Konzentration und/oder Temperatur wird dabei einem Fluoreszenz-Signal zugeordnet. Meist besteht in einem definierten Intervall ein linearer Zusammenhang. So kann die Konzentration eines fluoreszenzmarkierten Proteins via einer Fluoreszenzstärke nachgewiesen werden.

Will man eine Temperatur über ein Fluoreszenz-Signal nachweisen, soll eine Kalibrationsgerade, Temperatur vs. Intensität, erstellt werden. Dabei soll die Temperatur des Fluides bekannt sein. Das Messen der Fluidtemperatur in einer mikrofluidischen Kartusche ist aber kein triviales Unterfangen. Der Einbau von Thermoelementen kann oft mit der Funktionsweise der mikrofluidischen Einheit interferieren und Messungen verfälschen. Zudem wird die Komplexität des Systems erhöht. Eine Methode, welche die Temperatur 110 von Fluiden 120 in einem optofluidischen System mit optofluidischen Methoden messen kann, ermöglicht die hier vorgestellte Vorrichtung 105. Hierbei kann das bereits vorhandene Optiksystem, hier in Form der Kameraeinrichtung, genutzt werden und es soll vorteilhafterweise kein Aufwand betrieben werden, ein Temperaturmesssystem zu etablieren und in das Gesamtsystem der mikrofluidischen Analysevorrichtung 100 zu integrieren.

Ein Vorteil ist hierbei, dass optische Systeme nicht nur eine Messung von Fluoreszenzintensitäten erlauben, sondern auch eine räumliche Auflösung. Bewegung von Teilchen kann somit visualisiert und gemessen werden. Molekularbewegungen sind stark temperaturabhängig. Rückschlüsse auf die Temperatur können demnach über eine Messung von Bewegung, was bei einer Molekularbewegung via Diffusion möglich ist, getroffen werden. Diffusion ist vorteilhafterweise unabhängig von einer Intensität und soll nicht kalibriert werden.

Die hier vorgestellte Vorrichtung 105 ermöglicht demnach eine optofluidische Messung der Fluidtemperatur 110 in einer mikrofluidischen Kammer via Diffusion. Die Messung erfolgt gemäß diesem Ausführungsbeispiel via Fluoreszenz und benötigt gemäß diesem Ausführungsbeispiel keine weiteren Sensorelemente als das Hilfsmittel 135 in Form von Fluorophor und die Kameraeinrichtung.

Anders ausgedrückt ermöglicht die Vorrichtung 105 eine diffusionsbasierte, optofluidische Temperaturmessung zur Kalibrierung und Kontrolle einer Kammertemperatur in einem mikrofluidischen System.

Fig. 2 zeigt eine schematische Darstellung einer Diffusion eines Hilfsmittels 135 in ein Fluid 120 gemäß einem Ausführungsbeispiel. Dargestellt ist ein Bewirken der Diffusion in drei aufeinanderfolgenden Zeitabschnitten t₁, t₂, t₃, wobei der Zeitabschnitt t₃ den diffundierten Zustand des Hilfsmittels 135 in dem Fluid 120 in der Diffusionskammer 130 repräsentiert, wie er in Figur 1 gezeigt ist. Die Herbeiführung der Diffusion ist von der in Figur 1 beschriebenen Vorrichtung bewirkbar.

Dargestellt ist eine allgemeine Ausführungsform eines Verfahrens, wie es von der in Figur 1 beschriebenen Vorrichtung mittels eines Ansteuerns einer Pneumatikeinheit der mikrofluidischen Analysevorrichtung ansteuerbar ist. Die mikrofluidische Diffusionskammer 130, welche sich gemäß diesem Ausführungsbeispiel in symmetrische Teilbereiche unterteilen lässt, ist in einem ersten Zeitabschnitt t₁ mit einer fluoreszierenden Lösung in Form des Fluids 120 mit dem Hilfsmittel 135 mit vordefinierter Konzentration befüllt. Das Befüllen ist von der Vorrichtung ansteuerbar. Eine fluidspezifische Diffusionskonstante ist dabei bekannt. Diese kann in einem beliebigen System ermittelt worden sein. Unter symmetrischen Teilbereichen versteht man, dass mit einer Kameraeinrichtung oder optischen Einheit zwei verschiedene Aufnahmeflächen oder optische Messflächen R₁, R₂, engl.: "region of interest", kurz ROI, aufgezeichnet werden können, die die gleichen Volumen und/oder Geometrien vorweisen, damit diese vergleichbar sind.

Ein bestimmtes Teilvolumen der Diffusionskammer 130, gemäß diesem Ausführungsbeispiel idealerweise die Hälfte, wird dann in einem zweiten Zeitabschnitt t₂ durch laminaren Fluss mit einem Lösungspuffer in Form des Fluids 120 ohne den fluoreszierenden Markerstoff ausgetauscht worden. Dies wird ermöglicht, indem die Diffusionskammer 130 zwei Eingänge hat. Dabei wird der Puffer von einer Seite eingefüllt, während die zu verdrängende Fluoreszenzlösung durch den zweiten Eingang abgeführt wird. Der laminare Fluss ist zwingend notwendig, damit möglichst wenig aktive Durchmischung während des Fluidaustauschs entsteht. Gemäß diesem Ausführungsbeispiel wird der laminare Fluss unter Verwendung einer peristaltischen Pumpe und/oder eines präzisen Druckausgleichsystems erreicht, angesteuert von der Vorrichtung. Gemäß diesem Ausführungsbeispiel wird der Volumenaustausch mit der in Figur 1 beschriebenen Kameraeinrichtung verfolgt und aufgezeichnet.

Ist das Volumen ausgetauscht, wird das System ruhen gelassen und mittels Fluoreszenzmessung der beiden ROI R1, R2 die Mischung des Puffers mit der Fluoreszenzlösung aufgezeichnet. Dabei ergibt sich eine asymptotische Signalkurve. Aus den Kurven c(R1), c(R2) können die temperaturspezifischen Diffusionskonstanten berechnet werden, welche systemunabhängig sind. Hierzu wird von der Bestimmeinrichtung eine Diffusionsgleichung, also eine partielle Differenzialgleichung, gelöst.

Befindet sich das eine ROI im Bereich des Puffers, gemäß diesem Ausführungsbeispiel R₁, und das andere ROI symmetrisch im Bereich der Lösung, gemäß diesem Ausführungsbeispiel R₂, detektiert die Kurve von R₁ nach dem Austausch von Volumen nur Hintergrundsignal des Puffers, durch die Mischung durch Diffusion nimmt das Signal allerdings wieder zu und konvergiert mit der Kurve des R₂, welche mit hohem Signal startet.

Die in Fig. 1 beschriebene Vorrichtung ist gemäß diesem Ausführungsbeispiel dazu ausgebildet, um zumindest ein weiteres Diffusionssignal einzulesen, wobei das Diffusionssignal eine Konzentration I des Hilfsmittels 135 und das weitere Diffusionssignal eine weitere Konzentration I des Hilfsmittels 135 in dem Fluid 120 repräsentieren, wobei die Bestimmeinrichtung dazu ausgebildet ist, um die Temperatur in Abhängigkeit von einer Konzentration I des Hilfsmittels 135 entsprechend dem Diffusionssignal und weiteren Diffusionssignal und/oder einer Zeitspanne zwischen einer Aufzeichnung des Diffusionssignals und des weiteren Diffusionssignals zu bestimmen.

Als das Hilfsmittel 135 für die Fluoreszenzmessung ist eine beliebig detektierbare Lösung einsetzbar. Für qualitative Resultate wird gemäß einem Ausführungsbeispiel als das Hilfsmittel 135 ein fluoreszierend-markierter Dextranstandard verwendet. Dieser ist in einer definierten Konzentration vorlegbar. Dextrane, also lange Zuckerketten, sind in definierten Längen und somit Massen erhältlich. Gemäß einem Ausführungsbeispiel wird idealerweise als das Hilfsmittel 135 eine Lösung mit einer definierten Molekularmasse im Intervall von 5-50 kDa eingesetzt. Die Diffusionskonstanten derartiger Lösungen lassen sich gut ermitteln. Dextrane werden gemäß einem Ausführungsbeispiel auch als Lyophilisate vorgelegt oder in andere Lyophilisate integriert.

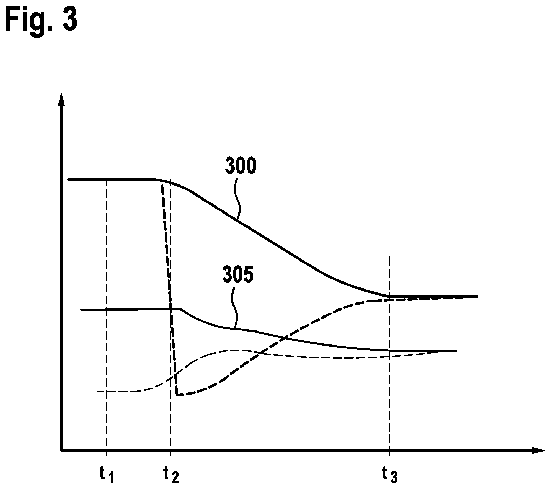

Fig. 3 zeigt eine schematische Darstellung einer Diffusion eines Hilfsmittels 135 in ein Fluid 120 gemäß einem Ausführungsbeispiel.

Dabei kann es sich um eine Diffusion handeln, wie sie in Figur 2 beschrieben ist, mit dem Unterschied, dass zwei Farbstoffe benutzt wurden. Anstelle eines Puffers wurde gemäß diesem Ausführungsbeispiel die Hälfte des Volumens mit einem zweiten fluoreszierenden Farbstoff ausgetauscht. Damit können zwei Kurven 300, 305 aufgezeichnet werden und eine Genauigkeit der Messung besonders gut abgeschätzt werden.

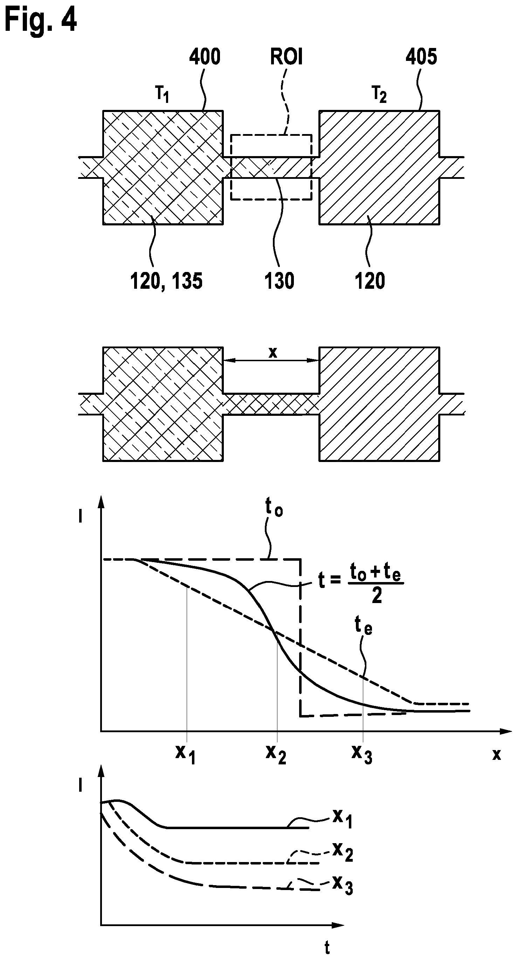

Fig. 4 zeigt eine schematische Darstellung einer Diffusion eines Hilfsmittels135 in ein Fluid 120 gemäß einem Ausführungsbeispiel. Dabei kann es sich um das in einer der vorangegangenen Figuren beschriebene Fluid 120 und Hilfsmittel 135 handeln, welche jedoch in einem Fluidbehälter mit zusätzlich einer ersten Kammer 400 und einer zweiten Kammer 405 angeordnet sind. Die Diffusionskammer 130 ist gemäß diesem Ausführungsbeispiel zwischen der ersten Kammer 400 und der zweiten Kammer 405 angeordnet. Die Herbeiführung der Diffusion ist wie in Figur 2 beschrieben von der in den vorangegangenen Figuren beschriebenen Vorrichtung bewirkbar.

Abbildung 4 zeigt eine Ausführung, wie Temperatur in zwei Kammern 400, 405 mit unterschiedlichen Heizertemperaturen T₁, T₂ gemessen werden kann. Dabei besitzen die Kammern 400, 405 jeweils ein eigenes Heizelement. Die Kammern 400, 405 sind zusätzlich durch die Diffusionskammer 130 in Form eines Kanals verbunden, dessen Volumen um ein Vielfaches kleiner ist, als das der beiden Kammern 400, 405. Idealerweise ist dieser Kanal gemäß diesem Ausführungsbeispiel durch ein Ventil getrennt. Eine der beiden Kammern 400 wird wie in Figur 2 beschrieben durch das Hilfsmittel 135 in Form eines Farbstoffs gefüllt und die zweite Kammer 405 analog nur mit dem Puffer, in welchem der Farbstoff gelöst wurde, also nur mit dem Fluid 120. Nun lässt man die Flüssigkeiten kommunizieren und misst mittels Fluoreszenz, wie sich Puffer und Farbstoff im Verbindungskanal, also der Diffusionskammer 130, mischen. Da der Verbindungskanal um einiges kleiner ist als die Kammern 400, 405, stellen die Kammern 400, 405 ein Reservoir mit konstanter Temperatur T₁, T₂ und Konzentration I dar. Folgerichtig entsteht in der Diffusionskammer 130 kein homogenes Gemisch wie in Figur 1 bis 3, sondern, dem zweiten Fick'schen Gesetz entsprechend, ein linearer Konzentrationsgradient tₑ. Eine Steigung des Gradienten ist abhängig von der Farbstoffkonzentration in den jeweiligen Kammern 400, 405. Die Kinetik des Gradientenaufbaus ist abhängig von der Diffusionsgeschwindigkeit, beschrieben durch die Diffusionskonstante und abhängig von den Temperaturen T₁, T₂ der Reservoirkammern 400, 405. Da alle Parameter, also Geometrien, Konzentrationen und Zeit, bis auf die Temperatur bekannt sind und von der in den vorangegangenen Figuren beschriebenen Vorrichtung eingelesen werden, kann die Temperatur wieder durch das Ermitteln der Diffusionskonstanten zurückgeschlossen werden. Dabei wird von der Bestimmeinrichtung gemäß diesem Ausführungsbeispiel eine Wärmegleichung, Wärme- und Stofftransport zwischen zwei Quellen, gefittet und nach der Diffusionskonstante aufgelöst.

Die ROI ist gemäß diesem Ausführungsbeispiel der Verbindungskanal. Die Konzentration I wird dabei, wie im mittleren Graphen gezeigt, in x-Richtung aufgetragen. Die Linie tₑ zeigt den Gleichgewichtszustand, den linearen Gradienten, nach Erreichen des Gleichgewichtzustandes. Die gestrichenen Linien zeigen die Konzentrationsentwicklung, welche aufgezeichnet wird. Ein unterster Graph in Figur 4 zeigt die zeitlichen Konzentrationsentwicklungen an gewissen Stellen x in der Diffusionskammer 130.

Gemäß einem Ausführungsbeispiel ist die in einer der vorangegangenen Figuren vorgestellte Vorrichtung dazu ausgebildet, um als das Diffusionssignal den linearen Konzentrationsgradienten tₑ zwischen der ersten Kammer 400 mit einer ersten Konzentration I des Hilfsmittels 135 und/oder Temperatur T₁ des Fluids 120 und der zweiten Kammer 405 mit einer zweiten Konzentration I des Hilfsmittels und/oder zweiten Temperatur T₂ des Fluids 120 einzulesen.

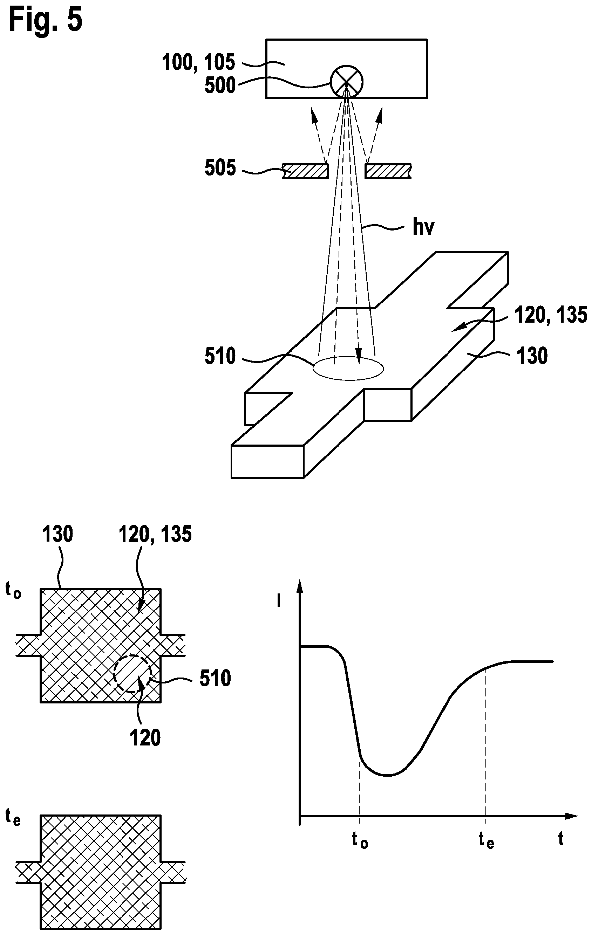

Fig. 5 zeigt eine schematische Darstellung einer mikrofluidischen Analysevorrichtung 100 mit einer Vorrichtung 105 zum Messen einer Temperatur eines Fluids 120 gemäß einem Ausführungsbeispiel. Dabei kann es sich um die in Fig. 1 beschriebene mikrofluidische Analysevorrichtung 100 mit einer der in einer der vorangegangenen Figuren beschriebenen Vorrichtungen 105 handeln, mit dem Unterschied, dass die mikrofluidische Analysevorrichtung 100 gemäß diesem Ausführungsbeispiel zusätzlich eine Beleuchtungseinrichtung 500 und eine Blende 505 aufweist.

Gemäß diesem Ausführungsbeispiel ist die Vorrichtung 105 dazu ausgebildet, um die Diffusionscharakteristik des Fluids 120 unter Verwendung eines Bleichens des Hilfsmittels 135 und/oder der Beleuchtungseinrichtung 500 zu erkennen. Der im Folgenden beschriebene Ablauf ist von der Vorrichtung 105 durch Ansteuern der Beleuchtungseinrichtung 500 und der Blende 505 bewirkbar.

In Figur 5 ist gezeigt, wie die Temperatur via Diffusion gemessen werden kann, ohne dass ein fluidisches Mischen stattfinden soll. Dabei wird in einem ersten Schritt ein Anregungslicht hv der Beleuchtungseinrichtung 500 gebündelt und in sehr hoher Intensität auf ein kleines Teilvolumen der Diffusionskammer 130 gerichtet. Diese Bündelung wird gemäß diesem Ausführungsbeispiel durch ein Pinhole in der Blende 05 vor der Lichtquelle und/oder durch Fokussierung eines Lichtstrahlers erreicht. Gemäß diesem Ausführungsbeispiel ist der Lichtstrahler im Filterset integriert. Die hohe Intensität wird durch ein Hochstellen einer Leistung der LED und/oder einer allgemeinen Lichtquelle, erreicht. Durch diese lokale, intensive Beleuchtung wird lokal das Hilfsmittel 135 in Form von Farbstoff gebleicht und liefert kein Signal. Ist genügend gebleicht worden, wird die Lichtintensität wieder heruntergedreht, die Blende 505 entfernt und die ganze Kammer unter Standardbelichtungsintensität beobachtet. Nun wird die Zeit gemessen, bis durch Diffusion, Brown'sche Molekularbewegung, der Spot 510 wieder durch Fluoreszenzsignal gesättigt ist. Dadurch kann die temperaturabhängige Diffusionskonstante wieder mittels der Vorrichtung 105 berechnet werden, da diese die einzige Unbekannte im System ist.

Gemäß diesem Ausführungsbeispiel wird das Prinzip des FRAP angewandt, engl. "Fluorescence Recovery after Photobleaching". Diese Methode wird auch zum Bestimmen von Diffusionskoeffizienten von Proteinen angewandt. Allerdings wird dabei ein isothermes System mit bekannten Temperaturen verwendet. Gemäß diesem Ausführungsbeispiel liegt eine modifizierte Ausführung vor, wobei die zu messende Zielgröße die Temperatur ist, welche durch Ermittlung der Diffusionskonstanten folgt. Die Diffusionskonstante inklusive Temperaturabhängigkeit ist bekannt und erlaubt einen Rückschluss auf die Temperatur des Fluids 120 in der mikrofluidischen Kammer 130.

Die Blende 505 ist gemäß diesem Ausführungsbeispiel aus Metall und/oder aus Filtermaterial selbst gefertigt, sodass die Blende 505 nur einem definierten Spot 510 Licht durchlässt.

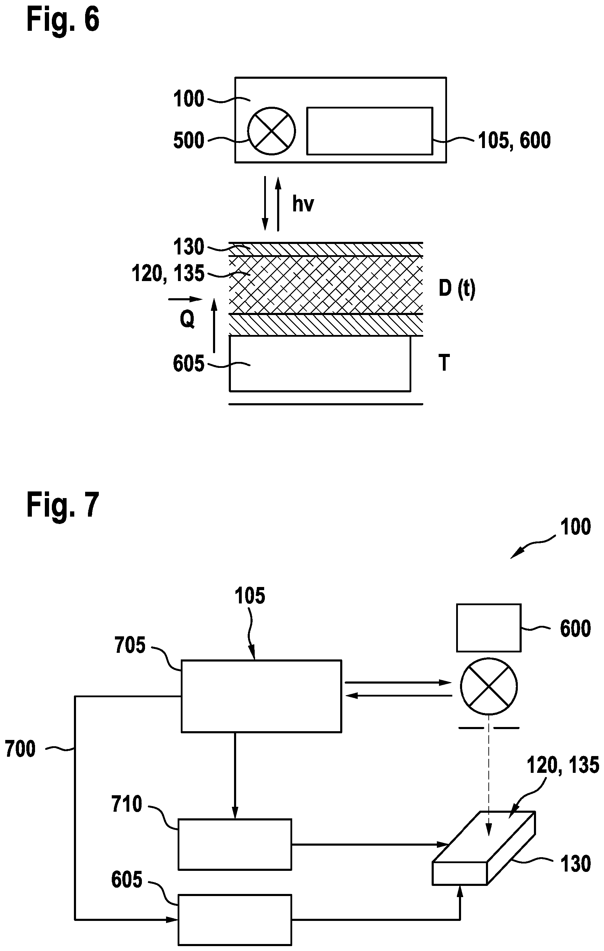

Fig. 6 zeigt eine schematische Darstellung einer mikrofluidischen Analysevorrichtung 100 mit einer Vorrichtung 105 gemäß einem Ausführungsbeispiel. Dabei kann es sich um die in Figur 5 beschriebene mikrofluidische Analysevorrichtung 100 mit der Vorrichtung 105 handeln.

Gezeigt ist gemäß diesem Ausführungsbeispiel eine Hardwareausführung, in welcher der vorgeschlagene, innovative Prozess unter Verwendung der Vorrichtung 105 angewandt werden kann. Ein Fluidbehälter mit zumindest einer Diffusionskammer 130 und dem darin angeordneten Fluid 120 und dem fluoreszierenden Hilfsmittel 135 wird von oben von der Kameraeinrichtung 600 observiert. Ein solcher Fluidbehälter kann auch als mikrofluidischer Chip oder Kartusche bezeichnet werden. Da Fluoreszenz verwendet wird, befinden sich die Lichtquelle und das Filterset auch auf einer Kameraseite. Auf einer unteren Seite liegt ein Heizer 605 vor, von welchem Wärme durch das Kartuschenmaterial zur eigentlichen fluidischen Kammer 130 führt. Die Temperatur in dieser Kammer ist von biochemischem Interesse. Ein Messen der Heizertemperatur reicht nicht, denn durch einen Wärmefluss entsteht ein Offset, also eine Temperaturverschiebung oder -abweichung zwischen der Heizertemperatur und der Temperatur in der Kammer, welche charakterisiert werden müsste.

Fig. 7 zeigt eine schematische Darstellung einer mikrofluidischen Analysevorrichtung 100 mit einer Vorrichtung 105 gemäß einem Ausführungsbeispiel. Dabei kann es sich um die in Figur 6 beschriebene mikrofluidische Analysevorrichtung 100 mit der Vorrichtung 105 handeln.

Gemäß diesem Ausführungsbeispiel ist die Vorrichtung 105 dazu ausgebildet, um unter Verwendung der Temperatur ein Anpasssignal bzw. Veränderungssignal 700 zum Einstellen einer Temperiereinrichtung auszugeben, insbesondere wenn die Temperatur in einem vorbestimmten Verhältnis zu einer Solltemperatur steht.

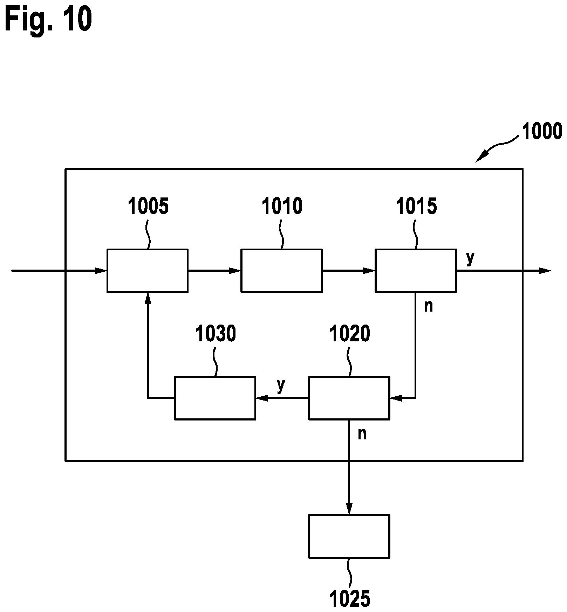

Dargestellt ist ein Kontrollsystem der Vorrichtung 105. Gemäß diesem Ausführungsbeispiel weist die Vorrichtung 105 eine Softwarekontrolleinheit 705 auf, die auch als ein sogenannter "DiffusionCheck" bezeichnet werden kann. Die Kameraeinrichtung 600 kommuniziert gemäß diesem Ausführungsbeispiel mit "DiffusionCheck", welcher Bilddaten von Diffusionsexperimenten einliest und auswertet. Die Softwarekontrolleinheit 705 ist außerdem dazu ausgebildet, um mit einer Pneumatikeinheit 710 der mikrofluidischen Analysevorrichtung 100 zu kommunizieren, wobei die Pneumatikeinheit 710 fluidische Abläufe wie Pumpen oder ein Entleeren der Kammern 130 steuert. Auch ist die Softwarekontrolleinheit 705 gemäß diesem Ausführungsbeispiel dazu ausgebildet, um eine Heizertemperatur zumindest eines Heizers 605 der Temperiereinrichtung der mikrofluidischen Analysevorrichtung 100 mittels des Anpasssignals bzw. Veränderungssignals 700 zu beeinflussen respektive diese zu verändern. Neben dem Bildeingang ist die Softwarekontrolleinheit 705 auch dazu ausgebildet, um zu veranlassen, dass mehr Bilder von der Kameraeinrichtung 600 gemacht werden und/oder um ein Fotobleichen zu induzieren, wie es in Figur 5 beschrieben ist. Die in den vorangegangenen Figuren beschriebenen Abläufe können mit "DiffusionCheck" gesteuert und angepasst werden und Prozesse via Rückkopplungssystem oder Feedback-System gesteuert werden, dies ist in Figur 10 näher beschrieben.

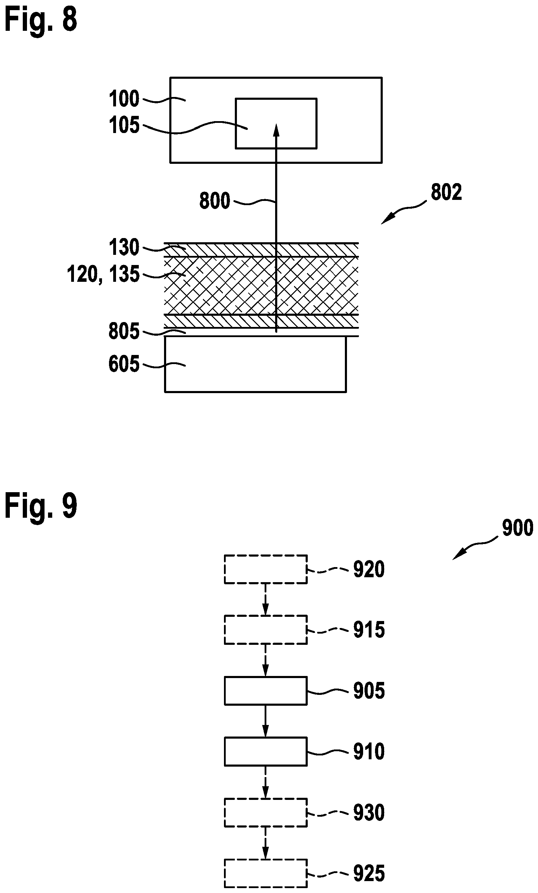

Fig. 8 zeigt eine schematische Darstellung einer mikrofluidischen Analysevorrichtung 100 mit einer Vorrichtung 105 gemäß einem Ausführungsbeispiel. Dabei kann es sich um die in Figur 7 beschriebene mikrofluidische Analysevorrichtung 100 mit der Vorrichtung 105 handeln.

Gemäß diesem Ausführungsbeispiel ist die Vorrichtung 105 dazu ausgebildet, um ein Prüfsignal 800 einzulesen, das eine Aufnahme eines Fluidbehälters 802 des Fluids 120, 135 auf oder an der Analysevorrichtung 100 anzeigt, insbesondere wobei die Vorrichtung 105 dazu ausgebildet ist, um ein Warnsignal auszugeben, wenn das Prüfsignal 800 eingelesen wird, das eine fehlerhafte Aufnahme des Fluidbehälters 802 auf oder an der Analysevorrichtung 100 anzeigt.

Das Prüfsignal 800 zeigt gemäß diesem Ausführungsbeispiel ein mögliches Fehlerbild, welches in Kombination mit der hier vorgestellten Diffusionsmessung und dem Feedback-System detektierbar ist. Wie in Figur 6 beschrieben, liegt der Fluidbehälter 802 in Form eines mikrofluidischen Chips gemäß diesem Ausführungsbeispiel auf einem Heizer 605 auf. Liegt der Chip nicht richtig auf, weil Staub, eine mechanische Verbiegung der Haltevorrichtung und/oder andere Fehler vorliegen, kann ein Luftspalt 805 zwischen Heizer 605 und Fluidbehälter 802 angeordnet sein, wobei der Luftspalt 805 zu anderen Offset-Temperaturen führen kann. Gemäß diesem Ausführungsbeispiel gibt die Vorrichtung 105 ansprechend auf das Prüfsignal 800, das das fehlerhafte Aufliegen anzeigt, ein Korrektursignal an den oder eine Mehrzahl von Heizern 605 aus, um eine höhere Heizertemperatur zu bewirken, damit ein mögliches Patientensample doch bei idealer Temperatur in der Kammer 130 analysiert werden kann und/oder es wird das Warnsignal ausgegeben, das dazu ausgebildet ist, um den Fehler zu melden und/oder einen Analysevorgang abzubrechen, damit der Schaden an der Maschine behoben werden kann.

Ein hier vorgestelltes Konzept braucht vorteilhafterweise keine zusätzlichen Hardwarekomponenten, außer bei dem in Figur 5 beschriebenen Photobleaching-Ansatz, bei dem die Blende in die Filtervorrichtung der Kameraeinrichtung integriert werden soll. Für den Ablauf des Prozesses ist eine Softwareroutine in die Vorrichtung 105 implementiert, welche die auszuführenden Schritte koordiniert und Bilder der Kameraeinrichtung auswertet.

Es folgt eine Zusammenfassung der Vorteile des hier vorgestellten Ansatzes:
Für eine Temperaturmessung müssen dank der Vorrichtung 105 keine zusätzlichen Sensoren in einen mikrofluidischen Chip oder eine Kartusche eingebaut werden. Ein Kanaldesign und ein fluoreszierender Farbstoff in Kombination mit dem Optikaufbau einer mikrofluidischen Plattform sind ausreichend für die Temperaturmessung des Fluides 120 in der Diffusionskammer 130.

Außerdem erfordert die Integration der Messung vorteilhafterweise keine Anpassung bzw. Veränderung der Hardware. Es soll demnach keine spezielle Prüfkartusche erstellt werden. Von Vorteil ist weiterhin, dass die Messung in situ, also während eines realen Experimentes, erfolgen kann. Wenn in einem fluidischen Ablauf eine Temperaturmessung nötig ist, kann diese entsprechend integriert werden, also mittels der Vorrichtung 105 angesteuert werden. Das Messen der Temperatur via Diffusion erfordert vorteilhafterweise keine Kalibration der Fluoreszenzintensität. Die Temperaturmessung von Fluiden mittels Floreszenz ist auch durch eine Intensitätsmessung möglich, allerdings müsste dazu eine Kalibrierungsgerade erstellt werden, in welcher bekannte Floreszenzen in Abhängigkeit von bekannten Temperaturen gemessen werden. Da genau diese Temperaturen die gesuchten Größen der Messung sind, erfordert diese Methoden eine zweite unabhängige Methode für die Kartusche, um die Temperatur zu bestimmen. Die Diffusionskonstante hingegen misst die raumzeitliche Auflösung eines Signals, welches unabhängig von der mikrofluidischen Plattform ermittelt werden kann. Ist die Diffusionskonstante eines Stoffes und deren Temperaturabhängigkeit einmal bestimmt, soll diese im Gegensatz zur Intensität vorteilhafterweise nicht neu bestimmt werden. Auch kann diese mit jedem beliebigen System erstellt werden oder auf publizierte Werte zurückgegriffen werden.

Die Möglichkeit der kalibrierfreien In-situ-Messung erlaubt ein dynamisches Anpassen bzw. Verändern der Temperiereinrichtung, insbesondere der Heizer 605. Anstatt vordefinierte Verschiebungen, engl. "Offset", von Temperatur von Heizer 605 und Kammer 130 anzunehmen, kann mittels der Vorrichtung 105 der Heizer 605 angepasst werden und ein real abweichender Temperaturwert korrigiert werden. Dies ist besonders von Vorteil, wenn ein biochemischer Assay sehr temperatursensitiv ist. Ein Anpassen oder Verändern der Temperatur ist auch wünschenswert, da Patientenproben in der Regel sehr heterogen sind. Da nicht immer bekannt ist, was sich alles in der Probe, also dem Fluid 120, befindet, kann sich die Wärmekapazität der Probe verändern und somit auch der vorher angenommene Offset. Bei temperatursensitiven Assays kann dies entscheidend für eine erfolgreiche Detektion sein. Auch können so anfällige zeitintensive und verlustreiche Aufreinigungen eingespart werden.

Eine gemäß diesem Ausführungsbeispiel mittels der Vorrichtung 105 durchführbare Messmethode ist zudem als ein Prüfmittel anwendbar, ob der mikrofluidische Chip vollständig auf den Heizern 605 liegt und kein kühlender Luftspalt 805 zwischen dem Heizer 605 und dem Chip vorliegt.

Eine Schrittabfolge der diffusionsbasierten Messung ist dank der Vorrichtung 105 vollständig automatisch abgebildet. Somit ist eine Temperaturcharakterisierung vorteilhafterweise weitgehend automatisiert.

Die Vorrichtung 105 erlaubt zudem das Messen der Temperatur von zwei Kammern, eine entsprechende Methode ist in Figur 4 beschrieben.

Die Vorrichtung 105 kann außerdem eingesetzt werden, um die Heizerqualität in einem Gerät über eine längere Zeit zu verfolgen. Offset-Messungen zwischen Heizer und Kartusche können von der Vorrichtung 105 aufgezeichnet werden. Ist das Gerät vernetzt - in Zusammenhang mit Fernwartung ,Predictive Maintenance' - kann dem Benutzer und/oder Hersteller eine Tendenz zur Abweichung gemeldet werden und eine Reparatur oder genauere Kontrolle veranlasst werden.

Fig. 9 zeigt ein Ablaufdiagramm eines Verfahrens 900 zum Messen einer Temperatur eines Fluids zur Verwendung mit einer mikrofluidischen Analysevorrichtung gemäß einem Ausführungsbeispiel.

Dabei kann es sich um ein Verfahren 900 handeln, das von einer der anhand einer der vorangegangenen Figuren beschriebenen Vorrichtungen ausführbar oder ansteuerbar ist.

Das Verfahren 900 umfasst einen Schritt 905 des Einlesens und einen Schritt 910 des Bestimmens. Im Schritt 905 des Einlesens wird zumindest ein Diffusionssignal eingelesen, das eine Diffusionscharakteristik einer Diffusion des Fluids repräsentiert. Im Schritt 910 des Bestimmens wird die Temperatur unter Verwendung des zumindest einen Diffusionssignals bestimmt.

Optional umfasst das Verfahren 900 gemäß diesem Ausführungsbeispiel außerdem einen Schritt 915 des Erkennens, einen Schritt 920 des Veränderns, einen Schritt 925 des Anpassens oder Veränderns und einen Schritt 930 des Überprüfens.

Der Schritt 915 des Erkennens wird gemäß diesem Ausführungsbeispiel vor dem Schritt 905 des Einlesens ausgeführt. Im Schritt 915 des Erkennens wird die Diffusionscharakteristik des Fluids unter Verwendung zumindest eines in das Fluid eingebrachten Hilfsmittels, insbesondere eines Fluoreszenzmittels, und/oder zumindest eines Kamerabilds erkannt.

Gemäß einem Ausführungsbeispiel wird im Schritt 905 des Einlesens zumindest ein weiteres Diffusionssignal eingelesen, wobei das Diffusionssignal eine Konzentration des Hilfsmittels und das weitere Diffusionssignal eine weitere Konzentration des Hilfsmittels in dem Fluid repräsentieren, wobei im Schritt 910 des Bestimmens die Temperatur in Abhängigkeit von einer Konzentration des Hilfsmittels entsprechend dem Diffusionssignal und weiteren Diffusionssignal und/oder einer Zeitspanne zwischen einer Aufzeichnung des Diffusionssignals und des weiteren Diffusionssignals bestimmt wird.

Gemäß einem alternativen Ausführungsbeispiel wird im Schritt 905 des Einlesens als das Diffusionssignal ein linearer Konzentrationsgradient zwischen einer ersten Kammer mit einer ersten Konzentration des Hilfsmittels und/oder ersten Temperatur des Fluids und einer zweiten Kammer mit einer zweiten Konzentration des Hilfsmittels und/oder zweiten Temperatur des Fluids eingelesen.

Im Schritt 920 des Veränderns wird eine Konzentration des Hilfsmittels vor dem Schritt 905 des Einlesens und/oder dem Schritt 915 des Erkennens verändert. Gemäß diesem Ausführungsbeispiel wird im Schritt 920 des Veränderns ein Pneumatiksignal an eine Pneumatikeinheit der mikrofluidischen Analysevorrichtung ausgegeben.

Gemäß einem Ausführungsbeispiel wird im Schritt 915 des Erkennens die Diffusionscharakteristik des Fluids unter Verwendung eines Bleichens des Hilfsmittels und/oder einer Beleuchtungseinrichtung erkannt.

Im Schritt 925 des Anpassens oder Veränderns wird unter Verwendung der Temperatur ein Anpasssignal oder Veränderungssignal zum Einstellen einer Temperiereinrichtung ausgegeben, insbesondere wenn die Temperatur in einem vorbestimmten Verhältnis zu einer Solltemperatur steht.

Im Schritt 930 des Überprüfens wird ein Prüfsignal eingelesen, das eine Aufnahme eines Fluidbehälters des Fluids auf oder an der Analysevorrichtung anzeigt, insbesondere wobei ein Warnsignal ausgegeben wird, wenn das Prüfsignal eingelesen wird, das eine fehlerhafte Aufnahme des Fluidbehälters auf oder an der Analysevorrichtung anzeigt.

Die hier vorgestellten Verfahrensschritte können wiederholt sowie in einer anderen als in der beschriebenen Reihenfolge ausgeführt werden.

Das Verfahren 900 ist durch Inspektion des fluidischen Ablaufs und/oder der benutzten Chemikalien nachweisbar. Auch durch simultanes Messen der Heizer- und Kameraaktivät lässt sich ein hier vorgestellter Prozess nachweisen.

Fig. 10 zeigt ein Blockschaltbild 1000 eines Verfahrens zum Messen einer Temperatur eines Fluids zur Verwendung mit einer mikrofluidischen Analysevorrichtung gemäß einem Ausführungsbeispiel. Dabei kann es sich um das in Figur 9 beschriebene Verfahren handeln.

Gezeigt ist ein mögliches Ablaufmuster unter Verwendung der Vorrichtung, insbesondere des in Figur 7 beschriebenen "DiffusionCheck". Wird dieser in einem fluidischen Ablauf aufgerufen, werden die Heizer der zu messenden Kammer auf einen Default-Wert für den IST-Wert eingestellt, welcher auf einer empirischen Erkenntnis die gewünschte Kammertemperatur meldet, hier dargestellt in einem ersten Block 1005, in dem eine Heizertemperatur auf eine Offset-Temperatur eingestellt wird.

Ein darauf folgender zweiter Block 1010 kennzeichnet ein Messen der Diffusionskonstante nach dem vorgeschlagenen Prinzip und ein Ermitteln der Kammertemperatur. Der zweite Block 1010 kann den in Figur 9 beschriebenen Schritten 905 und 910 entsprechen.

Ein darauf folgender dritter Block 1015 kennzeichnet einen Abgleich der gewünschten Temperatur, also der Solltemperatur, mit der gemessen Temperatur, also der IST-Temperatur.

Ist die Temperatur im gewünschten Bereich, wird "DiffusionCheck" beendet und der fluidische Ablauf des Gesamtassays wird weitergeführt. Ist der Abgleich negativ, wird in einem vierten Block 1020 geprüft, ob der neue Offset in einem Bereich liegt, für welchen zuvor experimentell ermittelt wurde, dass durch Umstellung der Heizer-SOLL-Temperaturen ein kleinerer Offset erreicht werden kann. Ist der Offset zu groß, also übersteigt der Offset einen vorbestimmten Toleranzbereich, weil ein Fehler vorliegt, beispielsweise ein Luftspalt, dann wird in einem fünften Block 1025 der Test abgebrochen und dem Benutzer ein entsprechender Fehler gemeldet. Ist der Offset im Toleranzbereich, beginnt der "DiffusionCheck" erneut, wobei in einem sechsten Block 1030 der Heizerwert, also eine Heizer-SOLL-Temperatur, verändert wird, in der Regel wird die Temperatur leicht erhöht. Stellt sich die Erhöhung als zu hoch heraus, wird diese tiefer gestellt. Diese Schleife, engl. "Loop", wird solange wiederholt, bis man iterativ ans Ziel kommt oder es wird nach einer definierten Anzahl an Schleifen abgebrochen, weil die Ziel- oder Solltemperatur nicht erreicht wird und eine Endlosschlaufe vermieden werden soll.

Ein serieller Aufruf von "DiffusionCheck" mit verschiedenen SOLL-Temperaturen erlaubt ein automatisches Kalibrieren und Charakterisieren der Kammertemperatur. Dies kann ausgenutzt werden, um das Heizerverhalten über eine längere Periode zu monitoren und/oder in einem Set-up mit ,Predictive Maintenance' eingesetzt zu werden.

## Patentansprüche

1. Verfahren (900) zum Messen einer Temperatur (110) eines Fluids (120) zur Verwendung mit einer mikrofluidischen Analysevorrichtung (100) mit zumindest einer Kameraeinrichtung (600), wobei das Verfahren (900) die folgenden Schritte umfasst:
- Erkennen (915) einer Diffusionscharakteristik einer Diffusion des Fluids (120) unter Verwendung zumindest eines Kamerabilds der Kameraeinrichtung (600), wobei die Diffusionscharakteristik unter Verwendung einer fluidspezifischen Diffusionskonstanten erkannt wird, welche eine raumzeitliche Kinetik des Fluids in m/s² repräsentiert;
- Einlesen (905) zumindest eines Diffusionssignals (125), das die Diffusionscharakteristik des Fluids (120) repräsentiert; und
- Bestimmen (910) der Temperatur (110) unter Verwendung des zumindest einen Diffusionssignals (125).

2. Verfahren (900) gemäß Anspruch 1, wobei im Schritt (915) des Erkennens die Diffusionscharakteristik des Fluids (120) unter Verwendung zumindest eines in das Fluid (120) eingebrachten Hilfsmittels (135), insbesondere eines Fluoreszenzmittels, erkannt wird.

3. Verfahren (900) gemäß Anspruch 2, bei dem im Schritt (905) des Einlesens zumindest ein weiteres Diffusionssignal eingelesen wird, wobei das Diffusionssignal (125) eine Konzentration des Hilfsmittels (135) und das weitere Diffusionssignal eine weitere Konzentration des Hilfsmittels (135) in dem Fluid (120) repräsentieren, wobei im Schritt (910) des Bestimmens die Temperatur (110) in Abhängigkeit von einer Konzentration des Hilfsmittels (135) entsprechend dem Diffusionssignal (135) und weiteren Diffusionssignal und/oder einer Zeitspanne zwischen einer Aufzeichnung des Diffusionssignals (135) und des weiteren Diffusionssignals bestimmt wird.

4. Verfahren (900) gemäß Anspruch 2 oder 3, bei dem im Schritt (905) des Einlesens als das Diffusionssignal (125) ein linearer Konzentrationsgradient (tₑ) zwischen einer ersten Kammer (400) mit einer ersten Konzentration des Hilfsmittels (135) und/oder ersten Temperatur (T₁) des Fluids (120) und einer zweiten Kammer (405) mit einer zweiten Konzentration des Hilfsmittels (135) und/oder zweiten Temperatur (T₂) des Fluids (120) eingelesen wird.

5. Verfahren (900) gemäß einem der Ansprüche 2 bis 4, mit einem Schritt (920) des Veränderns einer Konzentration des Hilfsmittels (135) vor dem Schritt (905) des Einlesens.

6. Verfahren (900) gemäß einem der Ansprüche 2 bis 3, bei dem im Schritt (915) des Erkennens die Diffusionscharakteristik des Fluids (120) unter Verwendung eines Bleichens des Hilfsmittels (135) und/oder einer Beleuchtungseinrichtung (500) erkannt wird.

7. Verfahren (900) gemäß einem der vorangegangenen Ansprüche, mit einem Schritt (925) des Anpassens oder Veränderns, in dem unter Verwendung der Temperatur (110) ein Veränderungssignal (700) zum Einstellen einer Temperiereinrichtung ausgegeben wird, insbesondere wenn die Temperatur (110) in einem vorbestimmten Verhältnis zu einer Solltemperatur steht.

8. Verfahren (900) gemäß einem der vorangegangenen Ansprüche, mit einem Schritt (930) des Überprüfens, in dem ein Prüfsignal (800) eingelesen wird, das eine Aufnahme eines Fluidbehälters (802) des Fluids (120) auf oder an der Analysevorrichtung (100) anzeigt, insbesondere wobei ein Warnsignal ausgegeben wird, wenn das Prüfsignal (800) eingelesen wird, das eine fehlerhafte Aufnahme des Fluidbehälters (802) auf oder an der Analysevorrichtung (100) anzeigt.

9. Vorrichtung (105) umfassend
- zumindest eine Einleseeinrichtung (115), welche dazu ausgebildet ist, um zumindest ein Diffusionssignal (125) einzulesen, das eine Diffusionscharakteristik einer Diffusion des Fluids (120) repräsentiert, wobei die Diffusionscharakteristik des Fluids (120) unter Verwendung zumindest eines Kamerasignals erkannt wird, wobei die Diffusionscharakteristik unter Verwendung einer fluidspezifischen Diffusionskonstanten erkannt wird, welche eine raumzeitliche Kinetik des Fluids in m/s² repräsentiert;
- zumindest eine Bestimmeinrichtung (120), welche dazu ausgebildet ist, um das Diffusionssignal (125) von einer Kameraeinrichtung einzulesen und die Temperatur (110) unter Verwendung des zumindest einen Diffusionssignals (125) zu bestimmen, wobei die Vorrichtung (105) eingerichtet ist, um Schritte des Verfahrens (900) gemäß einem der vorangegangenen Ansprüche auszuführen und/oder anzusteuern.

10. Mikrofluidische Analysevorrichtung (100), insbesondere optofluidische Analysevorrichtung (100) mit zumindest einer Kameraeinrichtung (600) und/oder Beleuchtungseinrichtung (500), mit einer Vorrichtung (105) gemäß Anspruch 9.

11. Computerprogramm, das dazu eingerichtet ist, das Verfahren (900) gemäß einem der Ansprüche 1 bis 8 auf einer Vorrichtung gemäß Anspruch 9 auszuführen und/oder anzusteuern.

12. Maschinenlesbares Speichermedium, auf dem das Computerprogramm nach Anspruch 11 gespeichert ist.

## Claims

1. Method (900) for measuring a temperature (110) of a fluid (120) for use with a microfluidic analysis apparatus (100) having at least one camera device (600), wherein the method (900) comprises the following steps:
- identifying (915) a diffusion characteristic of a diffusion of the fluid (120) using at least one camera image from the camera device (600), the diffusion characteristic being identified using a fluid-specific diffusion constant which represents space-time kinetics of said fluid in m/s²;
- reading (905) at least one diffusion signal (125) which represents the diffusion characteristic of the fluid (120); and
- determining (910) the temperature (110) using the at least one diffusion signal (125).

2. Method (900) according to Claim 1, wherein, during the identification step (915), the diffusion characteristic of the fluid (120) is identified using at least one auxiliary means (135), more particularly a fluorescence means, introduced into the fluid (120).

3. Method (900) according to Claim 2, wherein, during the reading step (905), at least one further diffusion signal is read, wherein the diffusion signal (125) represents a concentration of the auxiliary means (135) and the further diffusion signal represents a further concentration of the auxiliary means (135) in the fluid (120), wherein, during the determination step (910), the temperature (110) is determined on the basis of a concentration of the auxiliary means (135) corresponding to the diffusion signal (135) and the further diffusion signal and/or on the basis of a time interval between recording the diffusion signal (135) and the further diffusion signal.

4. Method (900) according to Claim 2 or 3, wherein, during the reading step (905), a linear concentration gradient (tₑ) between a first chamber (400) with a first concentration of the auxiliary means (135) and/or a first temperature (T₁) of the fluid (120) and a second chamber (405) with a second concentration of the auxiliary means (135) and/or a second temperature (T₂) of the fluid (120) is read as the diffusion signal (125).

5. Method (900) according to any of Claims 2 to 4, comprising a step (920) of altering a concentration of the auxiliary means (135) prior to the reading step (905).

6. Method (900) according to any of Claims 2 and 3, wherein, during the identification step (915), the diffusion characteristic of the fluid (120) is identified using a bleaching of the auxiliary means (135) and/or an illumination device (500).

7. Method (900) according to any of the preceding claims, including an adaptation or alteration step (925) in which an alteration signal (700) for setting a temperature-control device is output using the temperature (110), more particularly if the temperature (110) has a predetermined relationship with an intended temperature.

8. Method (100) according to any of the preceding claims, including a checking step (930), in which a test signal (800) is read, said test signal indicating that a fluid container (802) of the fluid (120) is received on or at the analysis apparatus (100), more particularly wherein a warning signal is output if the test signal (800) indicating an incorrect reception of the fluid container (802) on or at the analysis apparatus (100) is read.

9. Apparatus (105) comprising
- at least one reading device (115) which is embodied to read at least one diffusion signal (125) which represents a diffusion characteristic of a diffusion of the fluid (120), wherein the diffusion characteristic of the fluid (120) is identified using at least one camera signal, the diffusion characteristic being identified using a fluid-specific diffusion constant which represents space-time kinetics of said fluid in m/s²;
- at least one determination device (120) which is embodied to read the diffusion signal (125) from a camera device and determine the temperature (110) using the at least one diffusion signal (125), wherein the apparatus (105) is configured to carry out and/or control steps of the method (900) according to any of the preceding claims.

10. Microfluidic analysis apparatus (100), more particularly an optofluidic analysis apparatus (100) comprising at least one camera device (600) and/or illumination device (500), comprising an apparatus (105) according to Claim 9.

11. Computer program configured to execute and/or control the method (900) according to any of Claims 1 to 8 on an apparatus according to Claim 9.

12. Machine-readable storage medium, on which the computer program according to Claim 11 is stored.

## Revendications

1. Procédé (900) de mesure d'une température (110) d'un fluide (120) destiné à être utilisé avec un arrangement d'analyse microfluidique (100) comprenant au moins un dispositif de caméra (600), le procédé (900) comprenant les étapes suivantes :
- reconnaissance (915) d'une caractéristique de diffusion du fluide (120) en utilisant au moins une image de caméra du dispositif de caméra (600), la caractéristique de diffusion étant reconnue en utilisant une constante de diffusion spécifique au fluide, laquelle représente une cinétique spatio-temporelle du fluide en m/s² ;
- lecture (905) d'au moins un signal de diffusion (125), lequel représente la caractéristique de diffusion du fluide (120) ; et
- détermination (910) de la température (110) en utilisant l'au moins un signal de diffusion (125).

2. Procédé (900) selon la revendication 1, avec lequel, à l'étape (915) de la reconnaissance, la caractéristique de diffusion du fluide (120) est reconnue en utilisant au moins un agent auxiliaire (135), notamment un agent fluorescent, introduit dans le fluide (120).

3. Procédé (900) selon la revendication 2, avec lequel, à l'étape (905) de la lecture, au moins un signal de diffusion supplémentaire est lu, le signal de diffusion (125) représentant une concentration de l'agent auxiliaire (135) et le signal de diffusion supplémentaire une concentration supplémentaire de l'agent auxiliaire (135) dans le fluide (120), avec lequel, à l'étape (910) de la détermination, la température (110) est déterminée en fonction d'une concentration de l'agent auxiliaire (135) conformément au signal de diffusion (135) et au signal de diffusion supplémentaire et/ou à un intervalle de temps entre un enregistrement du signal de diffusion et du signal de diffusion supplémentaire.

4. Procédé (900) selon la revendication 2 ou 3, avec lequel, à l'étape (905) de la lecture, un gradient de concentration linéaire (tₑ) entre une première chambre (400) avec une première concentration de l'agent auxiliaire (135) et/ou une première température (T₁) du fluide (120) et une deuxième chambre (405) avec une deuxième concentration de l'agent auxiliaire (135) et/ou une deuxième température (T₂) du fluide (120) est lu en tant que le signal de diffusion (125).

5. Procédé (900) selon l'une quelconque des revendications 2 à 4, comprenant une étape (920) de la modification d'une concentration de l'agent auxiliaire (135) avant l'étape (905) de la lecture.

6. Procédé (900) selon l'une quelconque des revendications 2 à 3, avec lequel, dans l'étape (915) de la reconnaissance, la caractéristique de diffusion du fluide (120) est reconnue en utilisant un blanchiment de l'agent auxiliaire (135) et/ou un dispositif d'éclairage (500).

7. Procédé (900) selon l'une quelconque des revendications précédentes, comprenant une étape (925) d'adaptation ou de modification, dans laquelle un signal de modification (700) destiné à régler un dispositif d'équilibrage de la température est délivré en utilisant la température (110), notamment lorsque la température (110) se trouve dans un rapport prédéterminé par rapport à une température de consigne.

8. Procédé (900) selon l'une quelconque des revendications précédentes, comprenant une étape (930) de vérification, dans laquelle est lu un signal de contrôle (800), lequel indique un accueil d'un récipient (802) à fluide du fluide (120) sur ou au niveau de l'arrangement d'analyse (100), un signal d'alerte étant notamment délivré en sortie lorsque le signal de contrôle (800) lu indique un accueil incorrect du récipient (802) à fluide sur ou au niveau de l'arrangement d'analyse (100).

9. Arrangement (105), comprenant
- au moins un dispositif de lecture (115), lequel est configuré pour lire au moins un signal de diffusion (125), qui représente une caractéristique de diffusion d'une diffusion du fluide (120), la caractéristique de diffusion du fluide (120) étant reconnue en utilisant au moins un signal de caméra, la caractéristique de diffusion étant reconnue en utilisant une constante de diffusion spécifique au fluide, laquelle représente une cinétique spatio-temporelle du fluide en m/s² ;
- au moins un dispositif de détermination (120), lequel est conçu pour lire le signal de diffusion (125) à partir d'un dispositif de caméra et déterminer la température (110) en utilisant l'au moins un signal de diffusion (125), l'arrangement (105) étant conçu pour mettre en œuvre et/ou commander les étapes du procédé (900) selon l'une quelconque des revendications précédentes.

10. Arrangement d'analyse microfluidique (100), notamment arrangement d'analyse optofluidique (100) comprenant au moins un dispositif de caméra (600) et/ou dispositif d'éclairage (500), comprenant un arrangement (105) selon la revendication 9.

11. Programme informatique, qui est conçu pour mettre en œuvre et/ou commander le procédé (900) selon l'une quelconque des revendications 1 à 8 sur un arrangement selon la revendication 9.

12. Support d'enregistrement lisible par machine sur lequel est enregistré le programme informatique selon la revendication 11.
